# EUROPÄISCHE PATENTSCHRIFT

(11) **EP 0 998 664 B1**
(45) Veröffentlichungstag und Bekanntmachung des Hinweises auf die Patenterteilung: **09.01.2002**
(21) Anmeldenummer: 98940231.8
(22) Anmeldetag: 15.07.1998
(51) Int. Cl.: G01L 19/00, G01K 11/24, G01L 23/10, H01T 13/40

(54) **VORRICHTUNG UND VERFAHREN ZUR DRUCK- UND TEMPERATURBESTIMMUNG EINES GASES IN EINEM HOHLRAUM**
METHOD AND DEVICE FOR DETERMING GAS PRESSURE AND TEMPERATURE IN AN HOLLOW SPACE
PROCEDE ET DISPOSITIF POUR DETERMINER LA PRESSION ET LA TEMPERATURE D'UN GAZ DANS UN ESPACE CREUX

(30) Priorität: 22.07.1997 DE 19731329
(43) Veröffentlichungstag der Anmeldung: 10.05.2000
(73) Patentinhaber: DaimlerChrysler AG, 70567 Stuttgart (DE)
(72) Erfinder: ALLMENDINGER, Klaus, D-89429 Bachhagel (DE); HART, Martin, D-70771 Leinfelden (DE); LOISCH, Robert, D-71034 Böblingen (DE); SCHERER, Matthias, D-73730 Esslingen (DE)
(86) Internationale Anmeldenummer: EP9804399
(87) Internationale Veröffentlichungsnummer: WO9905494

(56) Entgegenhaltungen:
- DE-A- 4 010 609
- US-A- 4 299 117
- LIVENGOOD ET AL.: "Ultrasonic Temperature Measurement in Internal Combustion Engine Chamber" THE JOURNAL OF THE ACOUSTICAL SOCIETY OF AMERICA, Bd. 26, Nr. 5, September 1954, Seiten 824-830, XP002083057 in der Anmeldung erwähnt
- WIEDEMANN: "EIN SENSOR FUER DRUCK UND TEMPERATUR" ELEKTRONIK, Bd. 36, Nr. 16, 7. August 1987, Seiten 74-77, XP002058653

## Beschreibung

Die Erfindung bezieht sich auf eine Vorrichtung zur Bestimmung von Druck und Temperatur eines Gases in einem Hohlraum, insbesondere eines Kraftstoff/Luft-Gemischs im Brennraum eines Verbrennungsmotors, nach dem Oberbegriff des Anspruchs 1 sowie auf ein Verfahren zum Betrieb einer solchen Vorrichtung.

Es sind Vorrichtungen zur Bestimmung von Druck und Temperatur eines Kraftstoff/Luft-Gemischs in einem Brennraum eines Verbrennungsmotors bekannt, die als jeweils eigenständige Sensorbauteile einen Druckmeßfühler zur Druckerfassung und davon getrennt einen Temperaturmeßfühler zur Temperaturerfassung aufweisen. Die Bestimmung von Druck und Temperatur des Kraftstoff/Luft-Gemischs im Brennraum dient zur Erfassung bzw. Überwachung der innermotorischen Vorgänge, insbesondere zur Bestimmung der Motorlast. Während die Motorlast im stationären Motorbetrieb relativ genau über eine Messung des Drosselklappenwinkels, eine Saugrohrdruckmessung mittels eines entsprechend positionierten Drucksensors in Verbindung mit einer Temperaturmessung im Saugrohr oder über eine Luftmassenmessung mittels eines Heißfilmluftmassenmessers ermittelt werden kann, ergeben sich im Instationärbetrieb Abweichungen aufgrund von Füllungseffekten des Saugrohres, Rückströmungseffekten von Restgas in der Ventilüberschneidungsphase und Pulsationen im Saugrohr.

Durch den Einsatz von Zylinderdrucksensoren, d.h. von Drucksensoren, die im jeweiligen Brennraum des Motorzylinders positioniert sind, kann mittels Auswertung des Druckverlaufs in der Kompressionsphase die Luftmasse im Brennraum nach Schließen der Einlaßventile bestimmt werden, ohne daß sich dabei Instationäreffekte auswirken. Hierzu wird von der idealen Gasgleichung Gebrauch gemacht, um die Zylinderladung zu berechnen, wobei der in diese Gleichung eingehende Absolutdruck anhand des mittels der Zylinderdruckmessung erfaßten Relativdrucks bei einer definierten Kurbelwinkelstellung durch eine thermodynamische Nullpunktskorrektur nach Pischinger oder durch eine Saugrohrdruckangleichung kurz vor dem Schließen des Einlaßventils ermittelt werden kann. Das Brennraumvolumen läßt sich über den Kurbelwinkelbezug und die motorspezifischen Daten berechnen. Die weiter in die ideale Gasgleichung eingehende Gaskonstante ist bekannt und kann während der Kompressionsphase als annähernd konstant betrachtet werden. Wenn nun noch zusätzlich die Temperatur im Brennraum gemessen wird, kann daraus die Ladungsmasse anhand der idealen Gasgleichung bestimmt werden.

In der Offenlegungsschrift DE 40 10 609 A1 wird eine Vorrichtung zur Bestimmung von Druck und Temperatur eines Kraftstoff/Luft-Gemischs im Brennraum eines Verbrennungsmotors vorgeschlagen, die einen integrierten Teil einer Zündkerze bildet, die eine in einem rohrförmigen Isolator angeordnete Mittelelektrode mit einem hohlen Abschnitt aufweist, der ein Thermoelement umgibt, welches die Temperatur des vorderen Endes der Mittelelektrode und damit die Brennraumtemperatur erfaßt. Weiter besitzt die Zündkerze ein metallisches Mantelgehäuse mit einem Haltesitz um eine äußere Fläche des Mantelgehäuses. An dem Haltesitz ist ein ringförmiger Drucksensor so angeordnet, daß er den Brennraumdruck in einem Zylinderkopf erfaßt, wobei der Drucksensor als Zwischenlage zwischen dem Haltesitz und dem Zylinderkopf angeordnet ist, wenn die Zündkerze mit dem Zylinderkopf des Verbrennungsmotors fest verbunden ist.

Alternativ zur Verwendung solcher und ähnlicher Thermoelemente ist es bekannt, die Temperatur eines Kraftstoff/Luft-Gemischs im Brennraum eines Verbrennungsmotors über eine Ultraschall-Laufzeitmessung zu bestimmen, siehe die Offenlegungsschrift DE 44 42 078 A1 und die Zeitschriftenaufsätze J.C. Livengood et al., Ultrasonic Temperature Measurement in Internal Combustion Engine Chamber, The Journal of the Acoustical Society of America, Bd. 26, Nr. 5, Sept. 1954, S. 824 sowie G. Hohenberg, Gastemperatur-Meßverfahren durch Laufzeitmessung von Ultraschallimpulsen - ein neuer Weg zur Erfassung innermotorischer Vorgänge, Automobil-Industrie 2/75, S. 25. Im erstgenannten Aufsatz ist eine Vorrichtung zur Bestimmung von Druck und Temperatur eines Kraftstoff/Luft-Gemischs im Brennraum eines Verbrennungsmotors offenbart, die neben einer Ultraschall-Laufzeitmeßeinrichtung ein separates, eigenständiges Druckmeßelement zur Brennraumdruckerfassung beinhaltet. Im letztgenannten Aufsatz ist das Prinzip der Temperaturermittlung aus Ultraschall-Laufzeitmessungen unter Verwendung der bekannten Beziehung für die Schallgeschwindigkeit eines Gases in Abhängigkeit allein der Gaskonstanten, des Quotients der Wärmekapazitäten bei konstantem Druck und konstantem Volumen sowie der Temperatur beschrieben, wobei sich die zur Berechnung der Schallgeschwindigkeit aus den gemessenen Laufzeiten benötigte Entfernung aus den motorspezifischen geometrischen Daten, z.B. unter Ausnutzung des Kurbelwinkelbezugs, bestimmen läßt. In diesem Aufsatz wird zur Realisierung der Ultraschall-Laufzeitmeßeinrichtung vorgeschlagen, den zu verwendenden Ultraschallwandler in einem zugehörigen Gehäuse aufzunehmen und wie eine Zündkerze in den Zylinderkopf einzuschrauben.

In der Offenlegungsschrift WO 91/19966 ist ein Druck- und Wärmefluß-Sensor für den Verbrennungsraum von Verbrennungsmotoren beschrieben, bei dem ein Druck-Sensorelement, das als piezoelektrisches Element ausgelegt sein kann, und ein aus zwei Temperaturfühlern bestehendes Wärmefluß-Sensorelement in einem gemeinsamen Gehäuse integriert sind.

Der Erfindung liegt als technisches Problem die Bereitstellung einer Vorrichtung der eingangs genannten Art, die bei vergleichsweise kompakter Bauweise eine zuverlässige Bestimmung von Druck und Temperatur eines Gases in einem Hohlraum, insbesondere eines Kraftstoff/Luft-Gemischs im Brennraum eines Verbrennungsmotors, ermöglicht sowie eines dafür geeigneten Betriebsverfahrens zugrunde.

Die Erfindung löst dieses Problem durch die Bereitstellung einer Vorrichtung mit den Merkmalen des Anspruchs 1 sowie eines Verfahrens mit den Merkmalen des Anspruchs 3.

Die Vorrichtung nach Anspruch 1 beinhaltet eine kombinierte Drucksensor- und Ultraschallwandlereinheit mit einem Meßelement, das sowohl zur Druckmessung als auch als Ultraschallwandlerelement zur Temperaturbestimmung durch Ultraschall-Laufzeitmessung dient. Durch diese Integration von Druck- und Temperaturmeßfunktion in ein einziges Meßelement läßt sich die Vorrichtung sehr kompakt bauen und daher problemlos z.B. am Brennraum eines Verbrennungsmotors positionieren. Die separate Anbringung je eines eigenen Druck- und Temperatursensors erübrigt sich. Mit dieser Vorrichtung lassen sich Druck und Temperatur eines Gases in einem Hohlraum bekannter Abmessungen nach dem Verfahren gemäß Anspruch 3 bestimmen. Durch Anbrinung dieser Vorrichtung am Brennraum eines Verbrennungsmotors läßt sich die jeweils im Brennraum befindliche Luftmasse auch in instationären Motorbetriebsphasen vergleichsweise genau unter Zuhilfenahme der idealen Gasgleichung sowie der Meßwerte für Brennraumdruck und Brennraumtemperatur berechnen.

Bei einer nach Anspruch 2 weitergebildeten Vorrichtung ist die kombinierte Drucksensor- und Ultraschallwandlereinheit integrierter Bestandteil einer Zündkerze und benötigt daher neben dem ohnehin für die Zündkerze vorgesehenen Einbauraum keinen weiteren Platzbedarf zur Anbringung von Druck- und Temperatursensorelementen an den Brennraumwandungen.

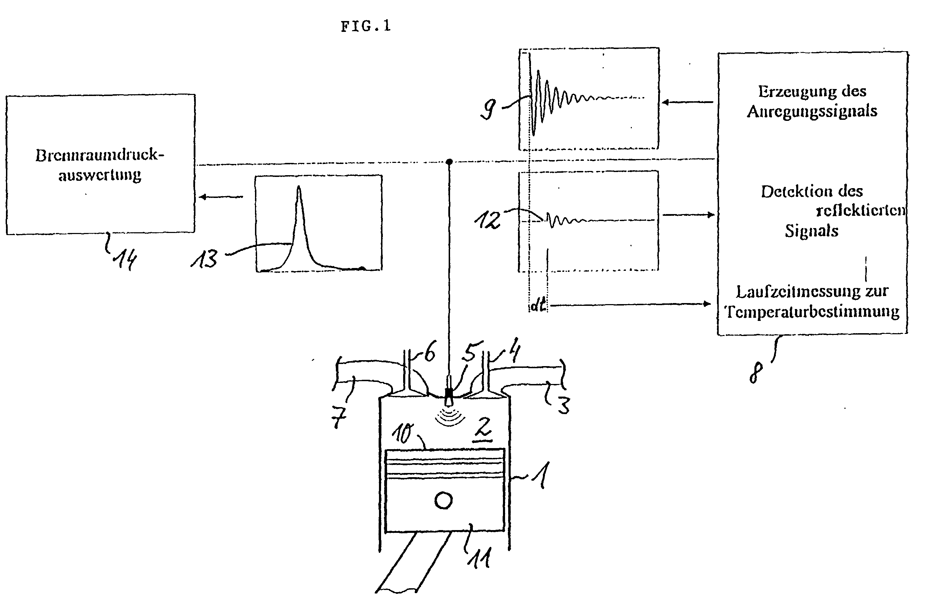

Eine vorteilhafte Ausführungform der Erfindung ist in der Zeichnung dargestellt und wird nachfolgend beschrieben.

Die einzige Figur zeigt eine schematische Blockdiagrammdarstellung einer Vorrichtung zur Bestimmung von Druck und Temperatur eines Kraftstoff/Luft-Gemischs im Brennraum eines Verbrennungsmotors.

Die in der Figur schematisch in Blockdiagrammform gezeigte Vorrichtung kann speziell dafür verwendet werden, Druck und Temperatur eines Kraftstoff/Luft-Gemischs in einem jeweiligen Brennraum des Verbrennungsmotors eines Kraftfahrzeuges zu bestimmen. Über die Beziehung a²=K·R·T für die Schallgeschwindigkeit a als Funktion der Gaskonstante R, der Gastemperatur T und des Quotienten κ der ihrerseits nur von der Temperatur T abhängigen Wärmekapazitäten c_{P} bei konstantem Druck und c_{V} bei konstantem Volumen, d.h. κ(T)=cₚ(T)/c_{V}(T), läßt sich durch Ultraschall-Laufzeitmessungen bei bekannter Lauflänge, d.h. Entfernung, die Temperatur zu ermitteln. Die Lauflänge kann z.B. über den Kurbelwinkelbezug und die motorspezifischen Daten berechnet werden. Der Druck wird direkt sensorisch erfaßt.

In der Figur ist schematisch ein Zylinder 1 eines Kraftfahrzeug-Verbrennungsmotors vom Hubkolbentyp gezeigt, in dessen Brennraum 2 über einen Ansaugtrakt 3 und ein Einlaßventil 4 ein geeignetes Kraftstoff/Luft-Gemisch eingeleitet werden kann, das mittels einer von oben in den Brennraum 2 hineinragenden Zündkerze 5 gezündet wird. Das durch den Verbrennungsprozeß im Brennraum 2 entstehende Abgas wird über ein Auslaßventil 6 und einen anschließenden Abgastrakt 7 abgeführt. Die Zündkerze 5 enthält charakteristischerweise die Vorrichtung zur Bestimmung von Druck und Temperatur des in den Brennraum 2 eingeleiteten Kraftstoff/Luft-Gemischs in Form einer nicht näher gezeigten, kombinierten Drucksensor- und Ultraschallwandlereinheit, die ein einziges Meßelement in Form eines ansteuerbaren piezoelektrischen Sensorplättchens aufweist. Dieses piezoelektrische Sensorplättchen ist so ausgelegt, daß es sowohl zur Druckmessung als auch in einer Ultraschallwandlerfunktion zum Senden und Empfangen von Ultraschallwellen dienen kann, wenn es entsprechend angesteuert wird. Die Ansteuerung erfolgt über eine Steuereinheit 8 der Druck- und Temperaturbestimmungsvorrichtung, wobei diese Steuereinheit 8 beispielsweise integrierter Bestandteil eines Motorsteuergerätes sein kann.

Auf diese Weise kann über das piezoelektrische Sensorplättchen sowohl der Druck als auch mittels Ultraschall-Laufzeitmessungen der vom Sensorplättchen ausgesandten und empfangenen Ultraschallwellen die Temperatur des Gases im Brennraum 2 bestimmt werden, ohne daß hierzu je ein eigener Druck- und Temperatursensor am Zylinder 1 angeordnet oder je ein eigenes Druck- und Temperaturmeßfühlerelement in die Zündkerze 5 oder ein anderes, mit dem Brennraum 2 in Kontakt stehendes Bauteil integriert werden müssen. Zur Durchführung der Druck- und Ultraschallaufzeit-Messungen bieten sich insbesondere die beiden folgenden Verfahren an.

Gemäß einer ersten möglichen Vorgehensweise veranlaßt die Steuereinheit 8 in bestimmten Zeitabständen eine kurze Ultraschallaufzeitmessung, während sie zu den übrigen Zeiten das piezoelektrische Sensorplättchen als Druckmeßelement ansteuert. Zu Beginn einer jeweiligen Ultraschallaufzeitmessung steuert die Steuereinheit 8 das piezoelektrische Sensorplättchen in der Zündkerze 5 zum Aussenden eines typischen Ultraschallwellenimpulses 9 an, wie er in der Figur diagrammatisch veranschaulicht ist. Anschließend detektiert das piezoelektrische Sensorplättchen in seiner Ultraschallwandlerfunktion den in der Figur ebenfalls diagrammatisch veranschaulichten, vom gegenüberliegenden Boden 10 des Hubkolbens 11 reflektierten Ultraschallwellenimpuls 12. Aus der zeitlichen Verschiebung dt dieses reflektierten Impulses 12 relativ zum Anregungsimpuls 9, welche die Laufzeit des Ultraschallwellenimpulses widerspiegelt, bestimmt die Steuereinheit 8 zunächst die Schallgeschwindigkeit des Gases im Brennraum 2. Dazu benötigt sie die Entfernung des reflektierenden Kolbenbodens 10 vom piezoelektrischen Sensorplättchen, die über den bekannten Kurbelwinkelbezug, d.h. die Stellung der Kurbelwelle und damit des Kolbens 11 zum Zeitpunkt der Laufzeitmessung, und den bekannten motorspezifischen Daten, insbesondere hinsichtlich der Motorgeometrie, berechnet werden kann. Aus der Schallgeschwindigkeit ermittelt die Steuereinheit 8 dann die Temperatur des Gases im Brennraum 2 anhand der bekannten, oben angegebenen Beziehung zwischen diesen beiden Größen. Unter Benutzung der idealen Gasgleichung kann dann anhand der ermittelten Druck- und Temperaturwerte die Luftmasse im Brennraum 2 bestimmt werden, wie gleichfalls oben erwähnt, wobei die Meßvorgänge und damit die Luftmassenbestimmung vorzugsweise während der Kompressionsphase nach Schließen des Einlaßventils 4 vorgenommen werden, da sich dann eventuelle Instationäreffekte nicht auswirken.

Nach beendeter Ultraschallaufzeitmessung steht das piezoelektrische Sensorplättchen bei dieser ersten Verfahrensvariante wieder für Brennraumdruckmessungen zur Verfügung. In diesen Druckmeßphasen wird das Sensorplättchen mit einer geeigneten Druckmeßfrequenz angeregt und das erhaltene, in der Figur wiederum diagrammatisch veranschaulichte Druckmeßsignal 13 durch eine geeignete, vorzugsweise als Software realisierte Brennraumdruckauswertung 14 der Steuereinheit 8 zur Gewinnung des Brennraumdrucks ausgewertet.

Eine zur ersten alternative zweite Vorgehensweise der Druck- und Ultraschallaufzeitmessung besteht darin, das piezoelektrische Sensorplättchen ständig mit der Druckmeßfrequenz anzuregen und dieses daher kontinuierlich als Druckmeßelement einzusetzen und zu gewünschten Zeitpunkten dem Brennraumdruckmeßsignal zusätzlich das Ultraschallanregungssignal zu überlagern. Auf diese Weise wird das Sensorplättchen zu den betreffenden Zeitpunkten gleichzeitig als Druckmeßelement und als Ultraschallwandlerelement eingesetzt. Das Brennraumdruckmeßsignal wird dabei von dem anregenden und von dem reflektierten Ultraschallwellensignal überlagert. In der Steuereinheit 8 ist in diesem Fall eine geeignete Signalverarbeitung implementiert, mit der aus diesem Ausgangssignal des Sensorplättchens das eigentliche Brennraumdruckmeßsignal sowie das anregende und das reflektierte Ultraschallwellensignal voneinander getrennt und danach zur Druck- und Ultraschallaufzeitbestimmung ausgewertet werden können. Aus der ermittelten Ultraschallaufzeit vermag die Steuereinheit 8 dann wieder auf die Temperatur des Brennraumgases, d.h. des Kraftstoff/Luft-Gemischs, zu schließen. Mit dieser Vorgehensweise ist bei Wahl entsprechend kurzer Abstände zwischen zwei Ultraschallwellenanregungen eine quasi kontinuierliche Bestimmung von Druck und Temperatur des Gases im Brennraum 2 möglich. Wie zu der ersten Verfahrensvariante beschrieben, kann auch bei der zweiten Verfahrensvariante in gleicher Weise aus der Druck- und Temperaturbestimmung die Luftmasse im Brennraum 2 pro Arbeitsspiel und damit die Motorlast nicht nur bei stationärem, sondern gerade auch bei instationärem Motorbetrieb vergleichsweise genau erfaßt werden.

Es versteht sich, daß sich die erfindungsgemäße Vorrichtung und das erfindungsgemäße Verfahren nicht nur zur Bestimmung von Druck und Temperatur eines Gases im Brennraum eines Verbrennungsmotors, sondern eines beliebigen, in einem Hohlraum bekannter Abmessungen befindlichen Gases eignen.

## Patentansprüche

1. Vorrichtung zur Bestimmung von Druck und Temperatur eines Gases in einem Hohlraum, insbesondere eines Kraftstoff/Luft-Gemischs im Brennraum eines Verbrennungsmotors, mit einem den Druck erfassenden, druckempfindlichen Meßelement (5),
**dadurch gekennzeichnet, daß**
das druckempfindliche Meßelement (5) überdies als Sende- und Empfangselement für Ultraschallimpulse ausgelegt ist und die Temperatur über die Laufzeit der Ultraschallimpulse entlang einer vorgegebenen Strecke bestimmt ist.

2. Vorrichtung nach Anspruch 1,
**gekennzeichnet**
**durch** ihre Integration mit einer Zündkerze (5).

3. Verfahren zum Betrieb der Vorrichtung nach Anspruch 1 oder 2, bei dem das Meßelement (5) entweder zu verschiedenen Zeitpunkten als Druckmeßelement einerseits und als Ultraschallwandlerelement andererseits oder kontinuierlich als Druckmeßelement und dazu überlagert zusätzlich als Ultraschallwandlerelement derart angesteuert wird, daß im letzteren Fall ein Druckmeßsignal und ein überlagertes Ultraschall-Laufzeitmeßsignal des Meßelement-Ausgangssignals von einer Auswerteeinheit (8) voneinander getrennt werden können.

## Claims

1. Device for determining the pressure and temperature of a gas in a chamber, particularly a fuel/air mixture in the combustion chamber of an internal combustion engine, with a pressure-sensitive measuring element (5) which records the pressure,
**characterized in that**
the pressure-sensitive measuring element (5) is moreover designed as a transmitter and receiver element for ultrasonic pulses, and the temperature is determined, over the duration of the ultrasonic pulses, along a set stretch.

2. Device in accordance with claim 1,
**characterized**
**by** its integral combination with a spark plug (5).

3. Process for operating the device in accordance with claim 1 or 2, in which the measuring element (5) is either controlled at different time-points as a pressure-measuring element and as an ultrasonic transducer element, or is continuously controlled as a pressure-measuring element and additionally, superimposed on this functioning, as an ultrasonic transducer element, such that, in the latter case, a pressure-measurement signal and a superimposed ultrasonic transmission-duration measurement-signal of the measuring element output signal can be separated from each other by an evaluation unit (8).

## Revendications

1. Dispositif pour déterminer la pression et la température d'un gaz dans une cavité, notamment d'un mélange carburant/air dans la chambre à combustion d'un moteur à combustion interne, comportant un élément de mesure (5) sensible à la pression, qui détecte la pression, **caractérisé en ce que** l'élément de mesure (5) sensible à la pression est agencé essentiellement en tant qu'élément d'émission et de réception pour des impulsions ultrasonores et que la température est déterminée pendant le temps de transit des impulsions ultrasonores le long d'une section prédéterminée.

2. Dispositif selon la revendication 1, **caractérisé par** son intégration dans une bougie d'allumage (5).

3. Procédé pour faire fonctionner le dispositif selon la revendication 1 ou 2, selon lequel l'élément de mesure (5) est commandé soit à des instants différents en tant qu'élément de mesure de pression d'une part et en tant qu'élément convertisseur d'ultrasons d'autre part, soit continûment en tant qu'élément de mesure de pression et, d'une manière superposée à cela, en supplément en tant qu'élément transducteur à ultrasons, de telle sorte que dans le dernier cas, un signal superposé de mesure de pression et un signal de mesure de temps de propagation des ultrasons, du signal de sortie de l'élément de mesure peuvent être séparés l'un de l'autre par une unité d'évaluation (8).
